# EUROPÄISCHE PATENTANMELDUNG

(11) **EP 0 945 724 A2**
(43) Veröffentlichungstag der Anmeldung: **29.09.1999**
(21) Anmeldenummer: 99105092.3
(22) Anmeldetag: 24.03.1999
(51) Int. Cl.: G01N 27/406

(54) **Schutzrohre für Glüh- und Messelemente**

(30) Priorität: 24.03.1998 DE 19812785
(71) Anmelder: Beru AG, 71636 Ludwigsburg (DE)
(72) Erfinder: Eller, Martin, 71642 Ludwigsburg (DE)
(74) Vertreter: WILHELMS, KILIAN & PARTNER Patentanwälte

(57) **Zusammenfassung**

Schutzrohr für Glüh- und Meßelemente mit einem Innenenrohr 1, wobei das Ende des Innenrohres im Bereich seines vorgesehenen Kontaktes mit einem Reaktionsmedium mit einem Schutzüberzug 13, 14, 15 gegen aggressive Medien versehen ist.

## Beschreibung

Die Erfindung betrifft ein neuartiges Schutzrohr für Glüh- und Meßelemente.

Glüh- bzw. Meßelemente werden häufig, beispielsweise bei Glühkerzen, Flammglühkerzen, bei Sensoren in heißen Gasen (Lamdasonde) und ähnlichen Meß- und Heizvorrichtungen, in Schutzrohre eingebracht, um die Heiz- bzw. Meßelemente vor aggressiven Reaktionsmedien, in denen sie heizen bzw. messen sollen, zu schützen; unter aggresiven Medien werden insbesondere flüssige und gasförmige Medien aggressiver chemischer Zusammensetzung und/oder hoher Temperaturen angesehen.

Um den Schutz gegen derartige aggressive Medien oder Bedingungen zu gewährleisten, werden häufig Schutzrohre aus einem besonders widerstandsfähigen Material hergestellt und verwendet. Bei Bedarf wird die Dicke der Wandungen solcher Schutzrohre überdimensioniert, um den gewünschten Schutz zu gewährleisten.

Wird hochwarmfestes Material verwendet, führt dieses zu hohem Werkzeugverschleiß beim Bearbeiten von Bohrungen, Andrehungen und Abstechen. Umform- und Fertigungsprozesse führen hierbei zu hohem materiellem Aufwand, beispielsweise bei der Herstellung von Glührohren für Stab- und Flammglühkerzen. Da die Rohre einstückig ausgebildet worden, entstehen entsprechend hohe Material- und Bearbeitungskosten, obgleich häufig nur ein Bereich, meistens der Spitzenbereich, der Schutzrohre den aggressiven Medien oder den aggressiven Umgebungsbedingungen ausgesetzt wird.

Unter Vermeidung der aufgezeigten Nachteile liegt der Erfindung die Aufgabe zugrunde, Schutzrohre für Glüh- und Meßelemente der beschriebenen Art zur Verfügung zu stellen, die insbesondere Schutz vor hohen Temperaturen, insbesondere in aggressiven Reaktionsmedien, gewährleisten, wobei gleichzeitig der technische Aufwand zur Herstellung vermindert werden soll.

Die erfindungsgemäße Aufgabe wird durch das Schutzrohr gemäß Anspruch 1 gelöst. Weitere vorteilhafte Ausgestaltungen ergeben sich aus den nachfolgenden Ansprüchen 2 bis 11.

In folgenden wird anhand der Figuren die Erfindung näher erläutert und aufgezeigt, daß die im Stand der Technik aufgezeigten Nachteile überwunden werden, wobei eine Reihe weiterer Vorteile erzielt wird.

In den Figuren ist
Figur 1 ein Querschnitt durch das Innenrohr eines erfindungsgemäßen Schutzrohres;
Figur 2 ist ein Querschnitt durch eine stufenförmige Ausbildung des Innenrohres als Tiefziehteil;
Figur 3 ist ein Querschnitt durch eine Ausführungsform eines erfindungsgemäßen Schutzüberzuges;
Figur 4 ist der Querschnitt durch eine andere Ausgestaltung des erfindungsgemäßen Schutzüberzuges;
Figur 5 ist der Querschnitt durch ein Schutzrohr mit Schweißzusatz gemäß Stand der Technik;
Figur 6 ist ein Querschnitt durch ein Schutzrohr gemäß Erfindung, das als Glühkerze ausgebildet ist;
Figur 7 ist eine andere Ausführungsform des erfindungsgemäßen Schutzrohres, das ebenfalls als Glühkerze, ausgebildet ist.
Figur 8 ist im Querschnitt der Spitzenbereich einer Glühkerze mit erfindungsgemäßem Schutzrohr und Schutzüberzug;
Figur 9 ist der Spitzenbereich der Glühkerze gemäß Figur 6 nach dem Verschweißen und im Querschnitt.

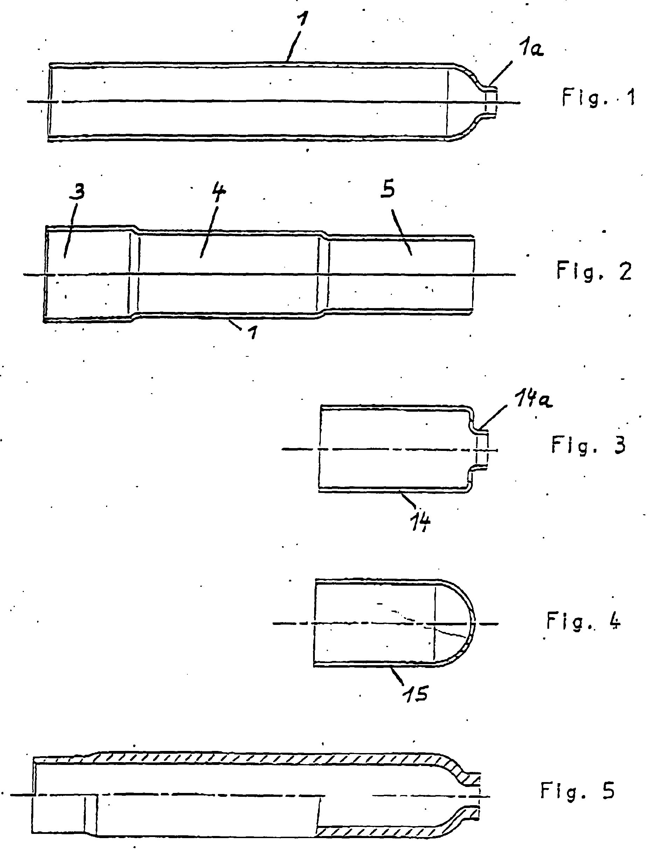

Figur 1 gibt schematisch den Querschnitt des Innenrohres 1 eines erfindungsgemäßen Schutzrohres wieder; dieses Schutzrohr ist an der einen Seite offen und an der gegenüberliegenden Seite verjüngt und mit dem Schweißansatz 1a versehen; unter Hinweis auf Figur 5, die das gleiche Bauteil nach dem Stand der Technik zeigt, ist darauf hinzuweisen, daß im Sinne der vorliegenden Erfindung die Wandung des Innenrohres 1 dünner als die Wandung des Bauteils gemäß Figur 5 ist.

Bevorzugt ist das Innenrohr 1 gemäß Figur 1 ein Tiefziehteil.

Figur 2 zeigt eine andere Ausführungsform des Innenrohres 1 gemäß erfindungsgemäßem Schutzrohr, das als Tiefziehteil mit mehr als einer Stufe (2 Bereiche) vorzugsweise 2 bis 3 Stufen (3 bis 4 Bereichen) ausgebildet ist; im vorliegenden Fall sind 2 Stufen bzw. 3 Bereiche nämlich der Abdichtbereich 3, der Abstützbereich 4 und der Glühbereich 5 ausgebildet. Diese Bereiche besitzen innerhalb eines Bereichs den gleichen Rohrdurchmesser; die Bereiche unterscheiden sich jedoch jeweils durch unterschiedliche Rohrdurchmesser, so daß die stufenförmige Ausbildung resultiert. In Figur 3 wird eine Ausführungsform des Schutzüberzugs 14 mit dem Schweißansatz 14a wiedergegeben; dieser ist dimensionsmäßig bezüglich seines Durchmessers im Rohrabschnittsbereich derart dimensioniert, daß er auf das Innenrohr 1 gemäß Figur 2 eng anliegend aufgebracht werden kann, so daß der vordere Bereich 5 des Innenrohres 1 von dem entsprechenden Rohrabschnitt 14 umgeben ist; die Fixierung des Schutzüberzugs 14 auf dem Innenrohr 1 im Bereich 5 kann in an sich bekannter Weise, beispielsweise durch Schweißen oder durch Einpressen des Innenrohres 1 in den Schutzüberzug 14 erfolgen. Der Schutzüberzug 14 besteht hierbei bevorzugt aus hochtemperaturbeständigen und/oder hochchemikalienbeständigen Material, insbesondere aus Keramik oder Metall und Metalllegierungen, insbesondere beispielsweise aus NiCr23Fe, NiCr25FeAlY (Nicrofer 6025 HT) oder FeCrAl7420. mit YHrium beimengung (INCOLOY MA 956).

Der Schutzüberzug 15 gemaß Figur 4 ist ein einseitig verschlossener Rohrabschnitt der in beschriebener Weise mit dem Innenrohr 1 gemaß Figur 1 oder 2 verbunden werden kann. Bei Kombination mit dem Innenrohr gemäß Figur 1 wird bei Ausbildung als Glühkerze zuvor die Glühwendel im Schweißansatz 1a verschweißt, worauf das derartig vorbereitete Innenrohr 1 in den Innenraum des Schutzüberzuges 15 gemäß Figur 4 eingebracht und fixiert wird.

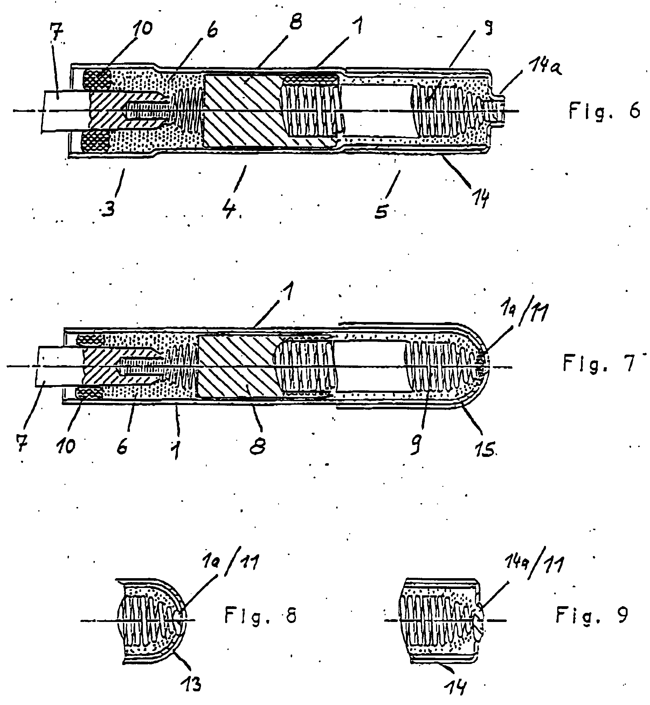

Die Figuren 6 und Figur 7 sind ein schematischer Querschnitt durch ein erfindungsgemäßes Schutzrohr, das im wesentlichen aus dem Innenrohr 1 und dem Schutzüberzug 14 (Figur 6 bzw. 15) Figur 7 besteht. Diese Schutzrohre sind als Glühkerzen ausgestattet und weisen im vorderen Bereich eine Glühwendel 9 auf, die in Isoliermaterial 6 eingebettet ist; gemäß Figur 6 ist die Glühwendel 9 im Schweißansatz 14a des Schutzüberzugs 14 verschweißt, im Fall der Figur 7 ist sie im Schweißansatz 1a des Innenrohras 1 unter Ausbildung einer Schweißlinse 11 verschweißt. Im hinteren Bereich der Glühwendel, oder einer hier angeordneten Regelwendel wird diese durch eine Abstützung 8 in Form eines hülsenförmigen Keramikbauteils, das die Wendel oder den Wendelbereich umgibt, abgestützt. Im Fall der Ausführungsform mit gestuftem Innenrohr 1 ist der Absatz zwischen Glühbereich 5 und Abstützbereich 4 als Auflage für die Keramikabstützung 8 vorteilhaft geeignet. Das hintere Ende des Innenrohrs 1 ist durch eine Dichtung 10 verschlossen; bevorzugt liegt diese bei der stufenförmigen Ausformung des Innenrohres 1 auf dem Absatz des Überganges das Abdichtbereichs 3 zum Abstützbereich 4.

Figur 8 entspricht im wesentlichen dem Spitzenbereich der Ausführungsform gemaß Figur 7, wobei hier jedoch der Schutzüberzug 13 nicht als festes Bauteil, sondern durch Pulverbeschichtung mit beispielsweise ytriumstabilisiertem Zirkonoxid oder NiCrAlY ausgebildet ist.

Figur 9 entspricht dem Spitzenbereich der Ausführungsform nach Figur 6, nach dem Verschweißen des Schweißansatzes 14a mit innen liegendem Hieizwendelende 9 unter Ausbildung der Schweißlinse 11.

## Patentansprüche

1. Schutzrohr für Glüh- und Meßelemente gekennzeichnet durch ein Innenrohr 1, wobei das Ende des Innenrohres im Bereich seines vorgesehenen Kontaktes mit einem Reaktionsmedium mit einem Schutzüberzug (13, 14, 15) gegen aggressive Medien versehen ist.

2. Schutzrohr nach Anspruch 1, dadurch gekennzeichnet, daß das Innenrohr 1 als Rohrabschnitt gleichbleibenden Durchmessers ausgebildet ist.

3. Schutzrohr nach Anspruch 1, dadurch gekennzeichnet, daß das Innenrohr 1 an genanntem Ende verjüngt und mit einem Schweißansatz 1a ausgebildet ist.

4. Schutzrohr nach Anspruch 1, dadurch gekannzeichnet, daß das Innenrohr 1 als stufenförmiger Rohrabschnitt mit zwei, drei oder mehr Bereichen (3, 4, 5) jeweils unterschiedlichen Durchmessers ausgebildet ist.

5. Schuczrohr nach einem der Ansprüche 1 bis 4, dadurch gekennzeichnet, daß das Innenrohr 1 tiefgezogen und warmfest ist.

6. Schutzrohr nach einem der Ansprüche 1 bis 5, dadurch gekennzeichnet, daß der Schutzüberzug ein Rohrabschnitt 14 ist, der an einem Ende verjüngt und mit einem Schweißansatz 14a ausgebildet ist, wobei das genannte Ende des Innenrohes 1 im Innenraum des Rohrabschnitts 14 fixiert ist.

7. Schutzrohr nach Anspruch 1 bis 5, dadurch gekennzeichnet, daß der Schutzüberzug ein Rohrabschnitt 15 ist, der an einem einem Ende verschlossen ist, wobei das freie Ende des Innenrohres 1 im Innenraum des Rohrabschnitts 15 fixiert ist.

8. Schutzrohr nach einem der Ansprüche 1 bis 5, dadurch gekennzeichnet, daß der Schutzüberzug 15 als Pulverbeschichtung aus hochwarmfestem oder hochkorrosionsfestem Material besteht.

9. Schutzrohr nach einem der Ansprüche 1, 3, 4, 5, dadurch gekennzeichnet, daß zwischen einem Anschluß 7 und dem genannten Ende des Innenrohres 1 mindestens ein Heizoder Regelelement 9 angeordnet ist, das in einem Füllmaterial 6 eingebettet und am genannten Ende des Innenrohres 1 mit Schweißansatz 14a des Rohrabschnitts 14 verschweißt ist, und wobei das Innnerohrende im Bereich des Anschlusses 7 mit einer Dichtung 10 verschlossen ist.

10. Schutzrohr nach Anspruch 8, dadurch gekennzeichnet, daß im Abstützbereich 4 des stufenförmigen Innenrohres 1 eine Abstützung des Elements 9 in Form einer das Element 9 umgebenen Keramikhülse 8 angeordnet ist.

11. Schutzrohr nach einem der Ansprüche 1, 2, 3, 7 und 8, dadurch gekennzeichnet,daß zwischen Anschluß 7 und freiem Ende des Innenrohres 1 mindestens ein Heiz- oder Regelelment 9 angeordnet ist, das in einem Füllmaterial 6 eingebettet und am genannten Ende des Innenrohres 1 im Schweißansatz 14 a des Rohrabschnitts 14 verschweißt ist, und wobei das Innenrohrende im Bereich des Anschlusses 7 mit einer Dichtung 10 verschlossen ist.
